# EUROPÄISCHE PATENTSCHRIFT

(11) **EP 3 569 877 B1**
(45) Veröffentlichungstag und Bekanntmachung des Hinweises auf die Patenterteilung: **06.07.2022**
(21) Anmeldenummer: 19000230.3
(22) Anmeldetag: 14.05.2019
(51) Int. Cl.: F16B 25/00, F16B 35/06, F16B 35/04, F16B 25/10

(54) **VERKLEIDUNG EINER GEBÄUDEFLÄCHE UND DAZUPASSENDE SCHRAUBE**
CLADDING FOR A BUILDING SURFACE AND SCREW RELATING THERETO
REVÊTEMENT DE SURFACE DE BÂTIMENT ET VIS ASSOCIÉE

(30) Priorität: 17.05.2018 AT 1442018
(43) Veröffentlichungstag der Anmeldung: 20.11.2019
(73) Patentinhaber: SIHGA GmbH, 4694 Ohlsdorf (AT)
(72) Erfinder: Kaiser-Mühlecker, Benedikt, 4531 Kematen an der Krems (AT); Gruber, Johann, 4842 Zell am Pettenfirst (AT)

(56) Entgegenhaltungen:
- DE-A1- 4 228 727
- DE-A1-102006 023 026
- DE-U1-202012 101 328
- JP-A- 2004 108 531
- US-A1- 2004 071 524

## Beschreibung

Die Erfindung betrifft eine Verkleidung einer Gebäudefläche und eine dazupassende Schraube.

Die Verkleidung umfasst dabei eine Deckschicht von aus Holzmaterial bestehenden länglichen Verkleidungselementen, eine zwischen Gebäudefläche und Deckschicht befindliche Unterkonstruktion und Schrauben, welche Verkleidungselemente und Unterkonstruktion verbinden. Die länglichen Verkleidungselemente sind dabei Latten oder Bohlen. Mit dem Begriff "Holzmaterial" ist gemeint, dass die betreffenden Gegenstände (Verkleidungselemente) entweder aus Holz oder aus einem Holz enthaltenden Materialverbund oder Verbundmaterial bestehen.

Bei der hier betroffenen Bauweise sind die verwendeten Schrauben selbstbohrend und selbstgewindeschneidend, verlaufen durch Schraubendurchgangsbohrungen in den länglichen Verkleidungselementen hindurch in Teile der Unterkonstruktion hinein und weisen einen Senkkopf auf, welcher an der Sichtoberfläche der Verkleidungselemente in diese hinein versenkt ist.

Neben der selbstverständlichen Haltefunktion gibt es an die mittels der Schrauben hergestellte Verbindung weitere Anforderungen, deren Erfüllung zumindest als Gesamtheit bei den derzeit in Verwendung befindlichen Schrauben Wünsche offen lässt:
a An der sichtbaren Randlinie der Berührungsfläche zwischen dem Schraubenkopf und dem Verkleidungselement sollen keine (sichtbaren) Späne des Holzmaterials eingeklemmt sein.
b Im Bereich um den Schraubenkopf herum soll die sichtbare Oberfläche des Verkleidungselementes keine durch den Schraubenkopf verursachte Mulde oder Erhebung oder sichtbare Brüche oder Risse aufweisen.
c Auch wenn im Lauf der Zeit Teile der Verkleidung zufolge Feuchtigkeits- und/oder Temperaturschwankungen quellen oder schwinden, sollen die Schrauben ihre Haltefunktion stets spielfrei erfüllen, nicht reißen und auch keine sichtbaren Materialausbrüche an den Verkleidungselementen verursachen.

Die US 9624961 B2 zeigt eine für den hier relevanten Einsatzzweck in Frage kommende selbstbohrende und selbstgewindeschneidende Schraube für den Einsatz an Holzmaterialien. Von der Schraubenspitze aus folgen entlang der Längsrichtung der Schraube ein langer Bereich mit einem selbstschneidenden Gewinde, dann ein kürzerer glatter kreiszylinderförmiger Bereich, dessen Durchmesser etwa gleich dem Kerndurchmesser des selbstschneidenden Gewindes ist, dann ein kurzer sogenannter Räumbereich und schließlich der Schraubenkopf. Der Räumbereich hat die Form eines zu dem zuvor genannten Gewinde gegenläufig ausgebildeten Schraubengewindes. Der Räumbereich dient dazu abgetragenes Material, welches sich in der Schraubendurchgangsbohrung befindet, vom Schraubenkopf weg in die Bohrung hinein zu verschieben und auch die Mantelfläche der Bohrung zu glätten. Der Schraubenkopf hat etwa die Form eines sich zum Gewinde hin verjüngenden Kegelstumpfes. Er weist Fräskanten auf, die entlang der Erzeugenden der Kegelfläche verlaufen. Weiters weist er eine Schneidkante auf, welche ringförmig entlang des äußeren Umfanges des Schraubenkopfes verläuft und zur Schraubenspitze hin ausgerichtet ist. Diese Kanten dienen dazu, die den Schraubenkopf aufnehmende Bohrung in dem durch die Schraube zu befestigenden Teil so auszubilden, dass der Schraubenkopf darin gut Platz findet und dass an dem zu befestigenden Teil im Nahbereich des Schraubenkopfes störende Vertiefungen, Ausrisse, Aufwölbungen etc. vermieden werden.

Nachteilig an der Schraube gemäß der US 9624961 B2 ist, dass sie keine nennenswerten Relativbewegungen zwischen den durch die Schraube aneinander befestigten Teilen in einer zur Schraubenachse normalen Richtung ohne Schäden zulässt. Zufolge klimabedingten Quellens und Schwindens von Holzmaterialien sind derartige Relativbewegungen aber praktisch nicht vermeidbar.

Bauweisen von Schrauben, die in Bezug auf die hier zu besprechenden Effekte zur US 9624961 B2 weitgehend gleich sind, zeigen auch die Schriften US7695228 B2, US7988396 B2, US8480343 B2 und WO2012158752 A1.

Die JP5138483 B2 zeigt eine Schraube für das Verankern von aus Holz bestehenden Elementen einer Deckschicht an einer Gebäudefläche die aus einem von Holz verschiedenen Material besteht. Die Schraube ist in jenem Längsbereich, mit welchem sie bestimmungsgemäß durch eine Durchgangsbohrung in der Deckschicht hindurch verläuft, mit einem Räumbereich ausgestattet und überdies gegenüber dem längeren Gewindebereich etwas gebogen. Durch diese Maßnahmen wird beim Eindrehen der Schraube die Durchgangsbohrung gegenüber dem Schraubendurchmesser kegelartig erweitert ausgebildet, wodurch eine gewisse leichte Beweglichkeit der Deckschicht gegenüber dem Gewindeteil der Schraube in der zur Gewindeachse normal liegenden Ebene erreicht werden soll. In der Praxis ist die Funktion nicht überzeugend. Die Biegung erschwert die Handhabung der Schraube; die erwünschte Beweglichkeit wird kaum zufriedenstellend erreicht, weil die kegelförmige Durchgangsbohrung im schlankeren Bereich zu eng ist und sie obendrein mit Spänen und Bohrmehl ausgestopft ist.

Die DE 20 2012 101 328 U1 offenbart eine Schraube für das Befestigen eines Holzteiles an einer Unterkonstruktion, wobei die Schraube aus einem Bolzen und einem versenkbarem Schraubenkopf besteht, wobei der Bolzen eine Bohrspitze mit daran anschließender Gewindezone aufweist, an welche ein Räumabschnitt folgt, auf welchen ein glatter kreiszylinderförmiger Schaft übergeht, der im versenkbaren Schraubenkopf endet. Der versenkbare Schraubenkopf ist als sich vom freien Ende her verjüngender Kegelstumpf mit bolzenseitigem kreiszylinderförmigem Ansatz ausgebildet. Dabei besteht bolzenseitigen Ansatz aus zwei Kreiszylindern unterschiedlichen Durchmessers, welche in Achsrichtung der Schraube hintereinander angeordnet sind, wobei der Kreiszylinder mit dem kleineren Durchmesser bolzenseitig angeordnet ist und der Durchmesser des größeren Kreiszylinders gleich dem Durchmesser der kleineren Stirnfläche des Kegelstumpfes ist. In Axialrichtung sind die einzelnen Kreiszylinder und der Kegelstumpf etwa gleich lang.

Terrassen werden häufig mit einer Verkleidungsfläche aus Bohlen aus einem Holzmaterial ausgestattet. Gemäß einer beliebten Bauweise sind dabei die Bohlen unter Zwischenlage von Abstandshaltern an einer Unterkonstruktion mittels Schrauben befestigt, welche durch die Bohlen vertikal hindurch in die Unterkonstruktion hinein verlaufen. Um alle oben aufgelisteten Anforderungen a, b, c zufriedenstellend erfüllen zu können, ist es zur Zeit erforderlich, die erforderlichen Schraubendurchgangsbohrungen in den Bohlen in einem eigenen Arbeitsschritt zu bohren. Zusätzlich wird die Bohrung auch angesenkt um den als Senkkopf ausgebildeten Schraubenkopf gut aufnehmen zu können.

Wenn Fassadenflächen mittels festgeschraubten Elementen aus Holzwerkstoffen gebildet werden, treten - oftmals etwas abgeschwächt - vergleichbare Anforderungen wie bei Terrassenflächenverkleidungen auf.

Die der Erfindung zu Grunde liegende Aufgabe besteht darin, eine Schraube für das Befestigen von aus einem Holzmaterial bestehenden Verkleidungselementen an einer Gebäudefläche so auszubilden, dass durch die Schraube selbst beim Vorgang des Einschraubens die erforderliche Durchgangsbohrung durch das jeweilige Verkleidungselement herstellbar ist und dass die dementsprechend hergestellte Verbindung auch die Gesamtheit der weiter oben aufgelisteten Anforderungen a, b, c erfüllt.

Zum Lösen der Aufgabe wird von den bekannten Merkmalen ausgegangen, dass eine selbstbohrende und selbstgewindeschneidende Schraube verwendet wird, bei welcher von der Schraubenspitze her eine Bohrspitze, ein Gewindeabschnitt, ein Räumabschnitt, ein gegenüber dem Räumabschnitt dünnerer glatter Schaftabschnitt und ein als Senkkopf ausgebildeter Schraubenkopf aufeinander folgen, wobei der Räumabschnitt in Achsrichtung der Schraube weniger als halb so lang ist wie der Gewindeabschnitt und als zum Gewindeabschnitt gegenläufig ausgerichtetes Gewinde ausgebildet ist, und wobei die Schraube und das damit zu befestigende Element der Gebäudeflächenverkleidung so aufeinander abgestimmt sind, dass der Abstand zwischen der freien Stirnfläche des Schraubenkopfes und dem Räumabschnitt mindestens gleich groß ist wie die Dicke des zu befestigenden Verkleidungselementes in Achsrichtung der Schraube.

Als erfindungsgemäße Weiterentwicklung dazu wird vorgeschlagen, dass die äußere Form des Schraubenkopfes mindestens drei zur Schraubenachse koaxiale und entlang dieser hintereinander liegende Kreiszylinderabschnitte unterschiedlichen Durchmessers und unterschiedlicher Länge aufweist, wobei die Kreiszylinderabschnitte bezüglich Durchmesser und Länge derart gereiht sind, dass sich der Kreiszylinderabschnitt mit dem kleinsten Durchmesser und der größten Länge am nächsten bei der Schraubenspitze befindet, und der Durchmesser dieses Kreiszylinderabschnittes um null bis fünf Zehntelmillimeter kleiner ist als der Durchmesser des Räumabschnittes.

Durch die erfindungsgemäße Bauweise wird erreicht, dass die Schraube an dem zu befestigenden Element nur mit dem Schraubenkopf anliegt, und dass sich zwischen dem glatten Schaftabschnitt der Schraube und in der Mantelfläche der Schraubendurchgangsbohrung ein leerer Ringspalt befindet.

Der wichtigste Effekt, der durch diese Maßnahme erzielt wird, ist, dass die Schraube in ausreichendem Ausmaß Relativbewegung des zu befestigenden Elementes gegenüber der Unterkonstruktion in der zur Schraubenachse normalen Richtung unter leichter Biegung ihres glatten Schaftabschnittes mitmachen kann, ohne dass es dabei zu störenden Nebeneffekten kommt. Besagte Relativbewegung ist bei Verwendung von Holzwerkstoffen für Verkleidungselemente von Gebäudeflächen de facto unvermeidbar, da Holzwerkstoffe bei Änderungen von Temperatur und/oder Feuchtigkeit quellen bzw. schwinden.

Details und vorteilhafte Weiterentwicklungen zu der Erfindung werden an Hand von Zeichnungen zu einer beispielhaften erfindungsgemäßen Ausführung näher erläutert:
- Fig. 1:: zeigt einen Ausschnitt aus einer beispielhaften erfindungsgemäßen Gebäudeflächenverkleidung in Schnittansicht, wobei die Schnittebene die durch die Längsrichtung des länglichen Verkleidungselementes 1 und die Achse der Schraube 2 aufgespannte Ebene ist.
- Fig. 2:: zeigt in Schnittansicht mit zur Schraubenachse parallel liegender Schnittebene den Kopf der Schraube von Fig. 1 in stark vergrößertem Maßstab.

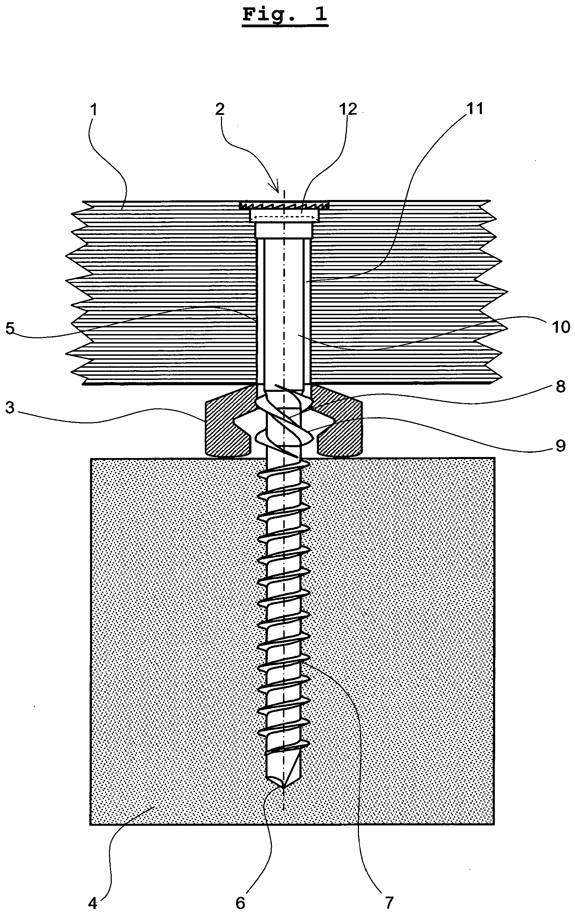

Fig. 1 zeigt in etwas vergrößertem Maßstab ein erfindungsgemäßes Arrangement aus einem Verkleidungselement 1, einer Schraube 2, einem Abstandshalter 3 und einer Unterkonstruktion 4. Das Arrangement könnte ein Ausschnitt aus einer Terrassenverkleidung sein. Das Verkleidungselement 1 ist dabei eine Latte oder Bohle aus einem Holzwerkstoff. Der Abstandshalter 3 ist beispielsweise ein U-Profil aus einem elastisch verformbaren Kunststoff. Die Unterkonstruktion 4 besteht typischerweise aus Holzlatten, deren Längsrichtung quer zur Längsrichtung der Verkleidungselemente 1 ausgerichtet ist. Die Abstandshalter 3 verlaufen jeweils an der Oberseite der Latten der Unterkonstruktion 4 entlang und sind damit parallel zu diesen ausgerichtet.

Die typischerweise aus Stahl bestehenden Schrauben 2 verlaufen normal zur Längsrichtung der Verkleidungselemente 1 in Schraubendurchgangsbohrungen 5 durch die Verkleidungselemente 1 hindurch in das Material der Unterkonstruktion 4 hinein und sind mit diesem in Gewindeeingriff.

Bestimmungsgemäß fixieren die Schrauben 2 das Verkleidungselement 1 an der Unterkonstruktion 4 in der gewünschten Position, lassen dabei aber Relativbewegung von Teilen des Verkleidungselementes 1 gegenüber der Unterkonstruktion 4 in den zur Schraubenachse normalen Richtungen zu. Für den Montagevorgang wesentliche weitere Funktionen der Schrauben 2 sind es, die jeweilige Schraubendurchgangsbohrung 5 im Verkleidungselement 1 und ggf. im Abstandshalter 3 sowie die Gewindebohrung in der Unterkonstruktion direkt während des Einschraubens der Schraube in die in Fig. 1 gezeigte Position zu bohren und das Gewinde in der Gewindebohrung in der Unterkonstruktion zu schneiden.

"Gewindeschneiden" bzw. "selbstschneidendes Gewinde" ist in diesem Dokument synonym zu sehen mit "gewindefurchen" bzw. "selbstfurchendes Gewinde". An Stelle eines über die Länge einer Latte der Unterkonstruktion 4 durch verlaufenden Profils als Abstandshalter 3 kann auch eine Reihe von in einem Abstand zueinander zwischen Verkleidungselemente 1 und Latte der Unterkonstruktion 4 angeordneten kleinflächigeren Gegenständen verwendet werden. Die Schrauben 2 können dann zwischen diesen als Abstandshalter dienenden Gegenständen verlaufen, sodass diese Gegenstände nicht durch die Schrauben 2 durchdrungen werden müssen.

Die Schraubenspitze 6 ist als Bohrspitze ausgebildet. An die Schraubenspitze 6 folgt in Achsrichtung der Schraube 2 ein Gewindeabschnitt 7, dessen Gewinde selbstschneidend ist.

Weiter in Achsrichtung der Schraube 2 folgt bevorzugt unmittelbar an den Gewindeabschnitt 7 anschließend ein Räumabschnitt 8. Der Räumabschnitt 8 hat die Funktion, die Schraubendurchgangsbohrung 5 nach dem Durchtritt des Gewindeabschnittes 7 durch Abfräsen von Material des Verkleidungselementes 1 aufzuweiten. Wie an sich bekannt weist der Räumabschnitt 8 dazu mindestens eine Fräskante 9 auf, welche zumindest gegenüber dem Kern des Gewindeabschnittes 7 radial vorspringt und nicht parallel zu den an der jeweils gleichen Seite der Schraubenachse befindlichen Gewindegängen des Gewindeabschnittes ausgerichtet ist. Für den vorliegenden Anwendungsfall ist es wichtig, dass die Fräskante in Form eines Gewindes um die Schraubenachse herum verläuft, wobei die Gangrichtung entgegengesetzt zur Gangrichtung des Schraubengewindes im Gewindeabschnitt 7 liegt. Durch diese entgegengesetzte Ausrichtung des Gewindeganges wird bestimmungsgemäß erreicht, dass Späne, die an der Fräskante 9 von der Schraubendurchgangsbohrung 5 abgeschabt werden, in Einschraubrichtung - also in Richtung auf die Schraubenspitze 6 hin - abtransportiert werden und nicht in der Schraubendurchgangsbohrung 5 verbleiben.

Weiter von der Schraubenspitze 6 weg folgt auf den Räumabschnitt 8 ein glatter Schaftabschnitt 10. Der Durchmesser dieses glatten Schaftabschnittes 10 ist deutlich geringer als jener des Räumabschnittes 8, beispielsweise nur etwa 70% des Durchmessers des Räumabschnittes 8. Wenn für die Verkleidungselemente 1 Bohlen mit 14 cm Breite und je Kreuzungsstelle mit einer Latte der Unterkonstruktion 4 zwei Schrauben 1 verwendet werden die am Verkleidungselement auf der gleichen Längskoordinate nebeneinander angeordnet sind, sollte der Durchmesser des Räumabschnittes 8 um mindestens 1 mm größer sein als der Durchmesser des glatten Schaftabschnittes 10, sodass bei hergestellter Verbindung zwischen dem glatten Schaftabschnitt 10 und der Mantelfläche der Schraubendurchgangsbohrung 5 ein leerer kreiszylindermantelförmiger Ringspalt 11 mit mindestens einem halben Millimeter Spaltdicke verbleibt.

Indem die Länge, welche der glatte Schaftabschnitt 10 und der Schraubenkopf 12 gemeinsam einnehmen, zumindest gleich viel beträgt wie die Dicke des Verkleidungselementes 1 in der zur Schraubenachse parallelen Richtung, ist bei fertig eingeschraubter Schraube 1 der Räumabschnitt 8 vollständig aus der Schraubendurchgangsbohrung hinausbewegt. Der leere Ringspalt 11 ragt damit vom Schraubenkopf 12 bis an die diesem gegenüberliegende Seite des Verkleidungselementes 1.

Wenn zufolge Quellens oder Schwindens des Materials des Verkleidungselementes 1 jener Bereich des Verkleidungselementes 1, der durch die Schraube 2 durchdrungen ist, normal zur Schraubenachse etwas gegenüber der Unterkonstruktion 4 wandert, so wird bei dieser Wanderbewegung der Schraubenkopf 12 mitbewegt und zumindest der glatte Schaftabschnitt 10 der Schraube 2 wird im elastischen Bereich etwas ausgebogen. Diese Verformung ist nicht weiter nachteilig, da zufolge des zur Unterkonstruktion 4 hin offenen leeren Ringspaltes 11 Platz dafür vorhanden ist.

Würde der glatte Schaftabschnitt 10 direkt an der Mantelfläche der Durchgangsbohrung anliegen oder wäre der Ringspalt 11 mit (-durch Feuchtgigkeit aufgequollenen -) Spänen gefüllt, so wäre die Schraube 2 nicht so gut elastisch beweglich. Es käme an der Schraube 2 zu sehr starken Lochleibungskräften und dadurch zu lokalem Ausbrechen von Material des Verkleidungselementes 1 und/oder zum Bruch der Schraube 2.

Es ist vorteilhaft den Räumabschnitt 8 mit mindestens zwei Gewindegängen auszubilden, deren Gewindesteigung zwei bis viermal so hoch ist wie die Gewindesteigung im Gewindeabschnitt 7. Damit werden beim Eindrehen der Schraube 2 gute Räumwirkung und guter Spanabtransport bei relativ geringem Drehmoment erreicht.

Der Durchmesser des Räumabschnittes 8 ist idealerweise größer als der Durchmesser des Gewindeabschnittes 7, typischerweise um etwa 10%.

Weiters ist es vorteilhaft, die Länge des Räumabschnittes 8 (etwa) gleich dem Abstand zwischen dem Verkleidungselement 1 und der Unterkonstruktion 4 - also gleich der Höhe des Abstandshalters 3 - auszubilden. Damit ist bei guter Räumwirkung und gutem Spanabtransport erreichbar, dass der Räumbereich vollständig aus dem Ringspalt 11 ausgefahren ist und dennoch nicht in das Material der Unterkonstruktion eingefahren ist.

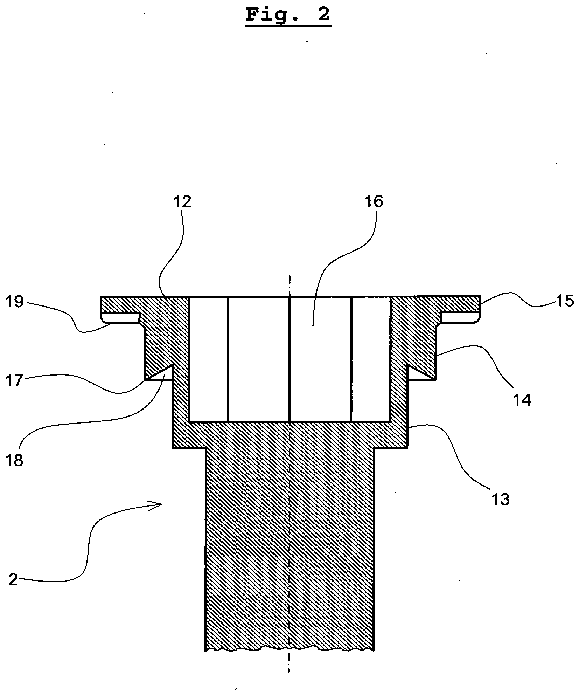

Fig. 2 zeigt den Schraubenkopf 12 der Schraube 2 im Detail. Der Schraubenkopf 12 ist ein Senkkopf, d.h. sein Durchmesser nimmt mit steigendem Abstand zur Schraubenspitze 6 zu und erreicht ein Maß, welches den Durchmesser des Gewindeabschnittes 7 deutlich übersteigt. Von der freiliegenden Stirnfläche des Schraubenkopfes 12 aus ragt eine Werkzeugausnehmung 16 in den Schraubenkopf 12 hinein; typischerweise hat die Werkzeugausnehmung 16 die Form eines Profils mit sternförmiger oder sechseckförmiger Querschnittsfläche.

Bei der bestimmungsgemäßen Montage wird die Schraubendurchgangsbohrung 5 an den Verkleidungselementen 1 nicht in einem separaten Arbeitsvorgang gebohrt und die Bohrung wird auch nicht extra angesenkt. Stattdessen wird die Schraubendurchgangsbohrung 5 beim Vorgang des Einschraubens durch die Schraube 2 selbst ausgebildet. Um die Schraubendurchgangsbohrung 5 am Berührungsbereich mit dem Schraubenkopf 12 so auszubilden, dass es am Schraubenkopf 12 nicht zu unschönen Unebenheiten, Rissen, sichtbar eingeklemmten Spänen etc. kommt, ist es ratsam, den Schraubenkopf 12 wie abgebildet und nachfolgend genauer beschrieben mit speziellen Merkmalen auszubilden:
Die äußere Form des Schraubenkopfes 12 sollte mindestens drei zur Schraubenachse koaxiale und entlang dieser hintereinander liegende Kreiszylinderabschnitte 13, 14, 15 unterschiedlichen Durchmessers aufweisen, wobei jener Kreiszylinderabschnitt 13, welcher am nächsten bei der Schraubenspitze 6 liegt, den kleinsten Durchmesser aufweist und der Kreiszylinderabschnitt 15, welcher am weitesten von der Schraubenspitze 6 entfernt liegt, den größten Durchmesser aufweist.

Der Durchmesser des der Schraubenspitze 6 am nächsten liegenden Kreiszylinderabschnittes 13 ist dabei bevorzugt um null bis fünf Zehntelmillimeter kleiner als der Durchmesser des Räumabschnittes 8. Damit wird erreicht, dass dieser Kreiszylinderabschnitt 13 gut in die Schraubendurchgangsbohrung 5 hineingleitet und dort gegen seitliches Spiel gut gehalten ist, aber keine unnötige Verdichtung im Material des Verkleidungselementes 1 bewirkt.

Die der Schraubenspitze 6 zugewandte Kante der Mantelfläche des Kreiszylinderabschnittes 14 mit dem zweitgrößten Durchmesser unter den Kreiszylinderabschnitten ist bevorzugt als Schneidkante 17 ausgebildet, indem die der Schraubenspitze 6 zugewandte Stirnfläche des besagten Kreiszylinderabschnittes 14 von der Mantelfläche des Kreiszylinders weg kegelmantelflächenartig zurückspringt, sodass an besagter Stirnfläche ein ringförmiger Hohlraum 18 entsteht. Beim Eindrehen der Schraube 2 wird durch die Schneidkante 17 Material des Verkleidungselementes 1 abgeschnitten und abgeschnittenes Material im ringförmigen Hohlraum 18 angesammelt. Damit ist das Verkleidungselement 1 am Berührungsbereich zur Mantelfläche des Kreiszylinderabschnittes 14 weniger auf Druck beansprucht, als wenn es die Schneidkante 17 nicht geben würde.

Die der Schraubenspitze 6 zugewandte Stirnfläche des Kreiszylinderabschnittes 15, welcher den größten Durchmesser unter den Kreiszylinderabschnitten aufweist und in ideal eingebautem Zustand mit der sichtbaren Oberfläche des Verkleidungselementes 1 bündig abschließt, ist als Stirnfräser ausgebildet, dessen Drehsinn mit dem Einschraubdrehsinn der Schraube 2 gleich ist. Indem an den Schneidkanten 19 dieses Stirnfräsers Fasern des Verkleidungselementes 1 sauber abgeschnitten werden, wird vor allem erreicht, dass sich neben dem Schraubenkopf 12 keine unschöne Mulde in der Oberfläche des Verkleidungselementes 1 ausbildet.

Bevorzugt sind - wie dargestellt - die Kreiszylinderabschnitte 13, 14, 15 des Schraubenkopfes 12 unterschiedlich lang, wobei der längste Kreiszylinderabschnitt 13 der Schraubenspitze 6 zugewandt liegt und der kürzeste Kreiszylinderabschnitt 15 jener ist, welcher am weitesten von der Schraubenspitze 6 entfernt liegt. Damit wird ein sehr guter Kompromiss aus der Haltewirkung gegen seitliche Kräfte und dem Vermeiden von oberflächlichen Beschädigungen des Verkleidungselementes 1 erreicht.

## Patentansprüche

1. Verkleidung einer Gebäudefläche, welche längliche Verkleidungselemente (1) aus einem Holzmaterial, eine Unterkonstruktion (4) und Schrauben (2) umfasst, wobei die Schrauben (2) selbstbohrend und selbstgewindeschneidend sind und in Schraubendurchgangsbohrungen (5) durch die Verkleidungselemente (1) hindurch verlaufen und mit dem Material der Unterkonstruktion (4) in Gewindeeingriff sind, wobei an der Schraube (2) von der Schraubenspitze (6) her eine Bohrspitze, ein Gewindeabschnitt (7), ein Räumabschnitt (8), ein gegenüber dem Räumabschnitt dünnerer glatter Schaftabschnitt (10) und ein als Senkkopf ausgebildeter Schraubenkopf (12) aufeinander folgen, wobei der Räumabschnitt (8) in Achsrichtung der Schraube (2) weniger als halb so lang ist wie der Gewindeabschnitt (7) und als zum Gewindeabschnitt (7) gegenläufig ausgerichtetes Gewinde ausgebildet ist, wobei der Abstand zwischen der freien Stirnfläche des Schraubenkopfes (12) und dem Räumabschnitt (8) mindestens gleich groß ist wie die Dicke des Verkleidungselementes in Achsrichtung der Schraube (2), wobei die äußere Form des Schraubenkopfes (12) mindestens drei zur Schraubenachse koaxiale und entlang dieser hintereinander liegende Kreiszylinderabschnitte (13, 14, 15) unterschiedlichen Durchmessers aufweist, welche bezüglich Durchmesser derart gereiht sind, dass sich der Kreiszylinderabschnitt (13) mit dem kleinsten Durchmesser am nächsten bei der Schraubenspitze (6) befindet,
**dadurch gekennzeichnet, dass**
die Kreiszylinderabschnitte (13, 14, 15) auch bezüglich ihrer Länge gereiht sind, wobei sich der Kreiszylinderabschnitt (13) mit der größten Länge am nächsten bei der Schraubenspitze (6) befindet, und der Durchmesser dieses Kreiszylinderabschnittes (13) um null bis fünf Zehntelmillimeter kleiner ist als der Durchmesser des Räumabschnittes (8).

2. Verkleidung nach Anspruch 1, **dadurch gekennzeichnet, dass** der Durchmesser des Räumabschnittes (8) um 7% bis 15% des Durchmesser des Gewindeabschnittes (7) größer ist als der Durchmesser des Gewindeabschnittes (7).

3. Verkleidung nach Anspruch 1 oder 2, **dadurch gekennzeichnet, dass** sich zwischen dem Verkleidungselement (1) und der Unterkonstruktion (4) ein Abstandshalter (3) befindet und dass die Länge des Räumabschnittes (8) gleich dem Abstand zwischen dem Verkleidungselement (1) und der Unterkonstruktion (4) ist.

4. Verkleidung nach einem der Ansprüche 1 bis 3, **dadurch gekennzeichnet, dass** der Durchmesser des Räumabschnitts (8) um mindestens einen Millimeter größer ist als der Durchmesser des glatten Schaftabschnittes (10).

5. Verkleidung nach einem der Ansprüche 1 bis 4, **dadurch gekennzeichnet, dass** die der Schraubenspitze (6) zugewandte Kante der Mantelfläche des Kreiszylinderabschnittes (14) mit dem zweitgrößten Durchmesser unter den Kreiszylinderabschnitten als Schneidkante (17) ausgebildet ist, die einen ringförmigen Hohlraum (18) an der der Schraubenspitze (6) zugewandten Stirnfläche des betreffenden Kreiszylinderabschnittes (14) umschließt.

6. Verkleidung nach einem der Ansprüche 1 bis 5, **dadurch gekennzeichnet, dass** die der Schraubenspitze (6) zugewandte Stirnfläche des Kreiszylinderabschnittes (15), welcher den größten Durchmesser unter den Kreiszylinderabschnitten aufweist, als Stirnfräser ausgebildet ist, dessen Drehsinn mit dem Einschraubdrehsinn der Schraube (2) gleich ist.

7. Schraube (2) für das Verankern von aus einem Holzmaterial bestehenden Verkleidungselementen (1), wobei die Schraube (2) selbstbohrend und selbstgewindeschneidend ist, von der Schraubenspitze (6) her eine Bohrspitze, ein Gewindeabschnitt (7), ein Räumabschnitt (8), ein gegenüber dem Räumabschnitt dünnerer glatter Schaftabschnitt (10) und ein als Senkkopf ausgebildeter Schraubenkopf (12) aufeinander folgen, wobei der Räumabschnitt (8) in Achsrichtung der Schraube (2) weniger als halb so lang ist wie der Gewindeabschnitt (7) und als zum Gewindeabschnitt (7) gegenläufig ausgerichtetes Gewinde ausgebildet ist, wobei der Durchmesser des Räumabschnittes (8) größer ist als der Durchmesser des Gewindeabschnittes (7, wobei die äußere Form des Schraubenkopfes (12) mindestens drei zur Schraubenachse koaxiale und entlang dieser hintereinander liegende Kreiszylinderabschnitte (13, 14, 15) unterschiedlichen Durchmessers aufweist, welche bezüglich Durchmesser derart gereiht sind, dass sich der Kreiszylinderabschnitt (13) mit dem kleinsten Durchmesser am nächsten bei der Schraubenspitze (6) befindet,
**dadurch gekennzeichnet, dass**
die Kreiszylinderabschnitte (13, 14, 15) auch bezüglich ihrer Länge gereiht sind, wobei sich der Kreiszylinderabschnitt (13) mit der größten Länge am nächsten bei der Schraubenspitze (6) befindet, und der Durchmesser dieses Kreiszylinderabschnittes (13) um null bis fünf Zehntelmillimeter kleiner ist als der Durchmesser des Räumabschnittes (8).

8. Schraube nach Anspruch 7, **dadurch gekennzeichnet, dass** der Durchmesser des Räumabschnittes (8) um mindestens einen Millimeter größer ist als der Durchmesser des glatten Schaftabschnittes (10).

9. Schraube nach Anspruch 7 oder 8, **dadurch gekennzeichnet, dass** die der Schraubenspitze (6) zugewandte Kante der Mantelfläche des Kreiszylinderabschnittes (14) mit dem zweitgrößten Durchmesser unter den Kreiszylinderabschnitten (13, 14, 15) als Schneidkante (17) ausgebildet ist, die einen ringförmigen Hohlraum (18) an der der Schraubenspitze (6) zugewandten Stirnfläche des betreffenden Kreiszylinderabschnittes (14) umschließt.

10. Schraube nach einem der Ansprüche 7 bis 9, **dadurch gekennzeichnet, dass** die der Schraubenspitze (6) zugewandte Stirnfläche des Kreiszylinderabschnittes (15), welcher den größten Durchmesser unter den Kreiszylinderabschnitten (13, 14, 15) aufweist, als Stirnfräser ausgebildet ist, dessen Drehsinn mit dem Einschraubdrehsinn der Schraube (2) gleich ist.

## Claims

1. Cladding of a building surface which comprises elongated cladding elements (1) made of a wood material, a substructure (4) and screws (2), wherein the screws (2) are self-drilling and self-tapping and extend through the cladding elements (1) in screw through-holes (5) and are in threaded engagement with the material of the substructure (4), wherein on the screw (2), from the screw tip (6), a drill tip, a threaded section (7), a broaching section (8), a smooth shank section (10), which is thinner than the broaching section, and a screw head (12), which is designed as a countersunk head, follow one another, wherein the broaching section (8), in the axial direction of the screw (2), is less than half as long as the threaded section (7) and is designed as a thread oriented in the opposite direction to the threaded section (7), wherein the distance between the free end face of the screw head (12) and the broaching section (8) is at least equal to the thickness of the covering element in the axial direction of the screw (2), wherein the outer shape of the screw head (12) has at least three circular cylinder sections (13, 14, 15) of different diameters which are coaxial with the screw axis and lie one behind the other along the latter and which are arranged in a row with respect to diameter in such a way that the circular cylinder section (13) with the smallest diameter is located closest to the screw tip (6),
**characterised in that**
the circular cylinder sections (13, 14, 15) are also lined up with respect to their length, whereby the circular cylinder section (13) with the greatest length is located closest to the screw tip (6), and the diameter of this circular cylinder section (13) is zero to five tenths of a millimetre smaller than the diameter of the broaching section (8).

2. Cladding according to claim 1, **characterised in that** the diameter of the broaching section (8) is 7% to 15% of the threaded section (7) greater than the diameter of the threaded section (7).

3. Cladding according to claim 1 or 2, **characterised in that** a spacer (3) is located between the cladding element (1) and the substructure (4) and that the length of the broaching section (8) is equal to the distance between the cladding element (1) and the substructure (4).

4. Cladding according to one of the claims 1 to 3, **characterised in that** the diameter of the broaching section (8) is greater than the diameter of the smooth shank section (10) by at least one millimetre.

5. Cladding according to one of the claims 1 to 4, **characterised in that** the edge of the circumferential surface of the circular cylinder section (14) which faces the screw tip (6) and has the second greatest diameter among the circular cylinder sections is designed as a cutting edge (17) which encloses an annular cavity (18) on the end face of the relevant circular cylinder section (14) which faces the screw tip (6).

6. Cladding according to one of the claims 1 to 5, **characterised in that** the end face of the circumferential surface of the circular cylinder section (15) which faces the screw tip (6) and has the greatest diameter among the circular cylinder sections is designed as a face cutter, the direction of rotation of which is the same as the screw-in direction of rotation of the screw (2).

7. Screw (2) for anchoring cladding elements (1) consisting of a wood material, wherein the screw (2) is self-drilling and self-tapping from the screw tip (6), a drill tip, a threaded section (7), a broaching section (8), a smooth shank section (10), which is thinner than the broaching section, and a screw head (12), which is designed as a countersunk head, follow one another, wherein the broaching section (8), in the axial direction of the screw (2), is less than half as long as the threaded section (7) and is designed as a thread oriented in the opposite direction to the threaded section (7), whereby the diameter of the broaching section (8) is greater than the diameter of the threaded section (7), wherein the outer shape of the screw head (12) has at least three circular cylinder sections (13, 14, 15) of different diameters which are coaxial with the screw axis and lie one behind the other along the latter and which are arranged in a row with respect to diameter in such a way that the circular cylinder section (13) with the smallest diameter is located closest to the screw tip (6),
**characterised in that**
the circular cylinder sections (13, 14, 15) are also lined up with respect to their length, whereby the circular cylinder section (13) with the greatest length is located closest to the screw tip (6), and the diameter of this circular cylinder section (13) is zero to five tenths of a millimetre smaller than the diameter of the broaching section (8).

8. Screw according to claim 7, **characterised in that** the diameter of the broaching section (8) is greater than the diameter of the smooth shank section (10) by at least one millimetre.

9. Screw according to claims 7 or 8, **characterised in that** the edge of the circumferential surface of the circular cylinder section (14) which faces the screw tip (6) and has the second greatest diameter among the circular cylinder sections (13, 14, 15) is designed as a cutting edge (17) which encloses an annular cavity (18) on the end face of the relevant circular cylinder section (14) which faces the screw tip (6).

10. Screw according to one of the claims 7 to 9, **characterised in that** the end face of the circumferential surface of the circular cylinder section (15) which faces the screw tip (6) and has the greatest diameter among the circular cylinder sections (13, 14, 15) is designed as a face cutter the direction of rotation of which is the same as the screw-in direction of rotation of the screw (2).

## Revendications

1. Habillage d'une surface de bâtiment, comprenant des éléments d'habillage (1) allongés en bois, une structure porteuse (4) et des boulons (2), les boulons (2) étant auto-perçants et auto-taraudeurs et passant par les éléments d'habillage (1) dans des trous traversants pour boulons (5) et étant en prise vissée avec le matériau de la structure porteuse (4), dans lequel un foret, une partie filetée (7), une partie aléseuse (8), une partie formant tige (10) lisse, plus mince par rapport à la partie aléseuse, et une tête de boulon sous forme de tête fraisée (12) se suivent au niveau du boulon (2) depuis la pointe de boulon (6), la partie aléseuse (8) ayant, dans le sens axial du boulon (2), une longueur de moins de la moitié de la partie filetée (7) et étant formée comme filet orienté à l'opposé de la partie filetée (7), la distance entre la face avant libre de la tête de boulon (12) et la partie aléseuse (8) correspondant au moins à l'épaisseur de l'élément d'habillage dans le sens axial du boulon (2), la forme extérieure de la tête de boulon (12) présentant au moins trois segments cylindriques circulaires (13, 14, 15) de diamètres différents, coaxiaux par rapport à l'axe du boulon et se trouvant successivement le long de celui-ci, lesquels sont, quant à leur diamètre, alignés de telle manière à ce que le segment cylindrique circulaire (13) se trouve, avec le plus petit diamètre, le plus près de la pointe du boulon (6),
**caractérisé en ce que**
les segments cylindriques circulaires (13, 14, 15) sont également alignés en termes de longueur, le segment cylindrique circulaire (13) se trouvant avec la plus grande longueur le plus près de la pointe du boulon (6), le diamètre de ce segment cylindrique circulaire (13) étant plus petit de zéro à cinq dixièmes de millimètre que le diamètre de la partie aléseuse (8).

2. Habillage selon la revendication 1, **caractérisé en ce que** le diamètre de la partie aléseuse (8) est plus grand de 7% à 15% du diamètre de la partie filetée (7) que le diamètre de la partie filetée (7).

3. Habillage selon la revendication 1 ou 2, **caractérisé en ce qu'**une entretoise (3) se trouve entre l'élément d'habillage (1) et la structure porteuse (4) et **en ce que** la longueur de la partie aléseuse (8) est identique à la distance entre l'élément d'habillage (1) et la structure porteuse (4).

4. Habillage selon l'une des revendications 1 à 3, **caractérisé en ce que** le diamètre de la partie aléseuse (8) est plus grand au moins d'un millimètre que le diamètre de la partie formant tige (10) lisse.

5. Habillage selon l'une des revendications 1 à 4, **caractérisé en ce que** le bord de la surface enveloppante du segment cylindrique circulaire (14), tourné vers la pointe du boulon (6), est conçu comme bord coupant (17), avec le deuxième plus grand diamètre sous les segments cylindriques circulaires, qui entoure un espace creux circulaire (18) sur la face avant du segment cylindrique circulaire (14) concerné, tournée vers la pointe du boulon (6).

6. Habillage selon l'une des revendications 1 à 5, **caractérisé en ce que** la face avant du segment cylindrique circulaire (15), tournée vers la pointe du boulon (6), qui présente le plus grand diamètre sous les segments cylindriques circulaires, est conçue comme fraise en bout, dont le sens de rotation est identique au sens de rotation de vissage du boulon (2).

7. Boulon (2) pour l'ancrage d'éléments d'habillage (1) composés de bois, le boulon (2) étant auto-perçant et auto-taraudeur, dans lequel un foret, une partie filetée (7), une partie aléseuse (8), une partie formant tige (10) lisse, plus mince par rapport à la partie aléseuse, et une tête de boulon sous forme de tête fraisée (12) se suivent depuis la pointe de boulon (6), la partie aléseuse (8) ayant, dans le sens axial du boulon (2), une longueur de moins de la moitié de la partie filetée (7) et étant formée comme filet orienté à l'opposé de la partie filetée (7), le diamètre de la partie aléseuse (8) étant plus grand que le diamètre de la partie filetée (7), la forme extérieure de la tête de boulon (12) présentant au moins trois segments cylindriques circulaires (13, 14, 15) de diamètres différents, coaxiaux par rapport à l'axe du boulon et se trouvant successivement le long de celui-ci, lesquels sont, quant à leur diamètre, alignés de telle manière à ce que le segment cylindrique circulaire (13) se trouve, avec le plus petit diamètre, le plus près de la pointe du boulon (6),
**caractérisé en ce que**
les segments cylindriques circulaires (13, 14, 15) sont également alignés en termes de longueur, le segment cylindrique circulaire (13) se trouvant avec la plus grande longueur le plus près de la pointe du boulon (6), le diamètre de ce segment cylindrique circulaire (13) étant plus petit de zéro à cinq dixièmes de millimètre que le diamètre de la partie aléseuse (8).

8. Boulon selon la revendication 7, **caractérisé en ce que** le diamètre de la partie aléseuse (8) est plus grand au moins d'un millimètre que le diamètre de la partie formant tige (10) lisse.

9. Boulon selon la revendication 7 ou 8, **caractérisé en ce que** le bord de la surface enveloppante du segment cylindrique circulaire (14), tourné vers la pointe du boulon (6), est conçu comme bord coupant (17), avec le deuxième plus grand diamètre sous les segments cylindriques circulaires (13, 14, 15), qui entoure un espace creux circulaire (18) sur la face avant du segment cylindrique circulaire (14) concerné, tournée vers la pointe du boulon (6).

10. Boulon selon l'une des revendications 7 à 9, **caractérisé en ce que** la face avant du segment cylindrique circulaire (15), tournée vers la pointe du boulon (6), qui présente le plus grand diamètre sous les segments cylindriques circulaires (13, 14, 15), est conçue comme fraise en bout, dont le sens de rotation est identique au sens de rotation de vissage du boulon (2).
